# EUROPÄISCHE PATENTSCHRIFT

(11) **EP 0 614 298 B1**
(45) Veröffentlichungstag und Bekanntmachung des Hinweises auf die Patenterteilung: **15.12.1999**
(21) Anmeldenummer: 94102371.5
(22) Anmeldetag: 17.02.1994
(51) Int. Cl.: H04L 25/08

(54) **Gegen Lösung von Masseverbindungen gesichertes Bussystem**
Bussystem protected against the uncoupling of earth connections
Système de bus protégé contre la séparation des mises à terre

(30) Priorität: 02.03.1993 DE 4306361
(43) Veröffentlichungstag der Anmeldung: 07.09.1994
(73) Patentinhaber: DaimlerChrysler AG, 70567 Stuttgart (DE)
(72) Erfinder: Rall, Bernhard, D-89075 Ulm (DE); Dorner, Jürgen, D-73240 Wendlingen (DE)

(56) Entgegenhaltungen:
- EP-A- 0 546 963
- WO-A-92/10897
- WO-A-93/08659
- DE-A- 3 901 589
- US-A- 3 974 403
- RADIO FERNSEHEN ELEKTRONIK, Bd. 35, Nr. 4, 1986, BERLIN, Seite 229 XP002027791

## Beschreibung

Die Erfindung betrifft ein gegen Lösen einer Masseverbindung gesichertes Bussystem zur Datenkommunikation, insbesondere in Kraftfahrzeugen.

Aus der WO-A-92/10897 ist ein Multiplex-Übertragungssystem mit zwei Datenleitungen und einer gemeinsamen Rückleitung bekannt, bei welchem eine logische Schutzschaltung Störungen der Datenübertragung detektiert und Gegenmaßnahmen steuert. Bei Kurzschluß einer Datenleitung gegen die Versorgungsspannung oder gegen Masse kann über zuschaltbare Spannungseinstellanordnungen die Spannung der Rückleitung in die Nähe des Kurzschlußpotentials gezogen und unter Umständen eine Datenübertragung auf nur einer Datenleitung und der Rückleitung fortgesetzt werden.

Ein in Kraftfahrzeugen gebräuchliches Datenkommunikationssystem zur Kontrolle, Verknüpfung und Steuerung einer Mehrzahl von Funktionen ist beispielsweise das CAN(Controlled Area Networt)-BUS-System. Die an das BUS-System als Endstellen angeschlossenen mehreren Steuergeräte enthalten jeweils eigene Einrichtungen (Spannungsregler) zur Erzeugung einer Betriebsspannung aus der höheren Batteriespannung des Bordnetzes. Die Spannungen auf den Datenleitungen liegen im regulären Betrieb innerhalb des Betriebsspannungsbereichs, der mittlere Gleichspannungspegel ist über Widerstandsnetzwerke auf ungefähr die halbe Betriebsspannung eingestellt. Durch Kurzschluß einer Datenleitung gegen Bezugspotential (Masse) oder Batteriepotential oder durch Lösen der Masseverbindung eines Endstellengeräts kann die gesamte Datenkommunikation unterbrochen werden.

Das Lösen der Masseverbindung an nur einem Endstellengerät kann durch Verschieben des Gleichspannungspegels auf den Datenleitungen zum Ausfall der gesamten Datenkommunikation führen, obwohl das Kommunikationssystem auch ohne diese eine Endstelle noch mit ausreichender Betriebssicherheit des gesamten Systems einsatzbereit wäre.

Der Erfindung liegt daher die Aufgabe zugrunde, ein Datenkommunikationssystem anzugeben, welches auch beim Lösen der Masseverbindung eines Endstellengeräts noch eine Datenkommunikation erlaubt, ohne die Beständigkeit des Systems gegen einen Kurzschluß mit einem Bordpotential zu beeinträchtigen.

Die Erfindung ist im Patentanspruch 1 beschrieben. Die unabhängigen Ansprüche enthalten vorteilhafte Ausgestaltungen und Weiterbildungen der Erfindung.

Die Erfindung ermöglicht auch bei Lösen der Masseverbindung einer Endstelle noch die Datenkommunikation zwischen den übrigen Endstellen, indem das BUS-Potential auf einen noch in den Endstellen verarbeitbaren Wert begrenzt wird. Für den Fall, daß ein Kurzschluß der Datenleitung gegen das Versorgungspotential auftritt, bleibt der Strom durch die Schutzschaltung begrenzt, so daß diese nicht zerstört wird. Eine Datenkommunikation ist in einem solchen Kurzschlußfall i.a. nicht mehr möglich. Die Erfindung ist besonders vorteilhaft bei einem symmetrischen BUS-System, insbesondere dem CAN-BUS-System, durch Anordnung der Schutzschaltung in einem für Datensignale im regulären Betrieb neutralen Punkt.

Die Erfindung ist nachfolgend anhand von Ausführungsbeispielen unter Bezugnahme auf die Abbildungen noch eingehend veranschaulicht. Dabei zeigt
- FIG. 1: ein symmetrisches BUS-System in Sternstruktur
- FIG. 2: eine Anordnung mit einer von Masse gelösten Endstelle
- FIG. 3: die prinzipielle Kennlinie einer Schutzschaltung
- FIG. 4: eine erste Ausführungsform einer Schutzschaltung
- FIG. 5: eine weitere Ausführungsform einer Schutzschaltung

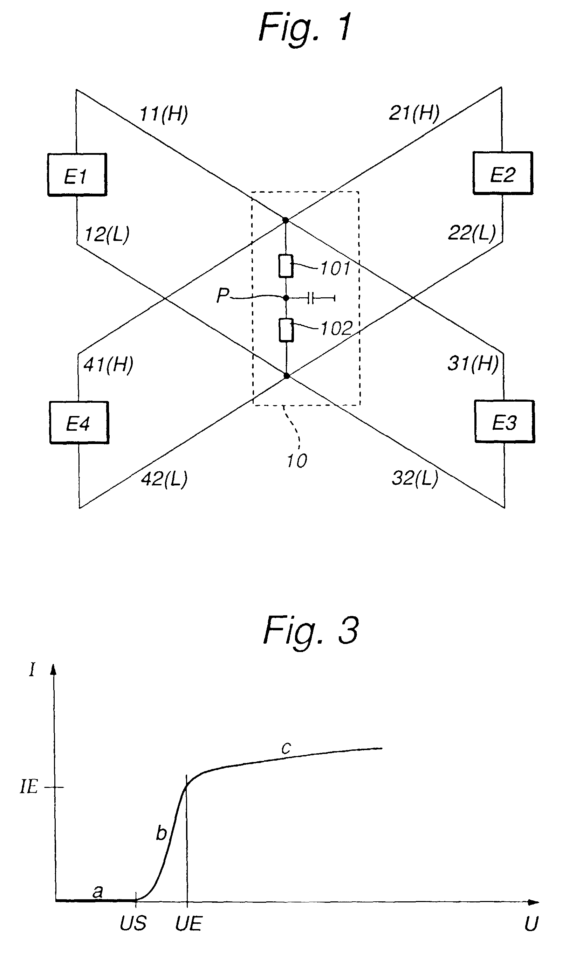

Das in FIG. 1 skizzierte BUS-System enthält mehrere Endstellengeräte E 1, E 2, E 3, E 4 die mittels symmetrischer Datenleitungen mit Einzelleitern H (11, 21, 31, 41) und L (12, 22, 32, 42), die in einem Netzknoten 10 zusammenlaufen, miteinander zum Datenaustausch verbunden sind.

Der Netzknoten enthält eine Lastimpedanz aus zwei in Serie liegenden gleich großen Widerständen 101, 102, die die Einzelleiter H und L der symmetrischen Datenleitung verbinden. Der Verbindungspunkt P der beiden Widerstände ist als Mittelabgriff der Lastimpedanz ein für Datensignale neutraler Punkt. Der Kondensator 103 leitet in aus der Patentanmeldung P 41 35 436 bekannter Weise hochfrequente Gleichtaktstörungen gegen das Bezugspotential Masse ab. Aus Anpassungsgründen kann zu dem Kondensator 103 noch ein niederohmiger Widerstand in Serie liegen.

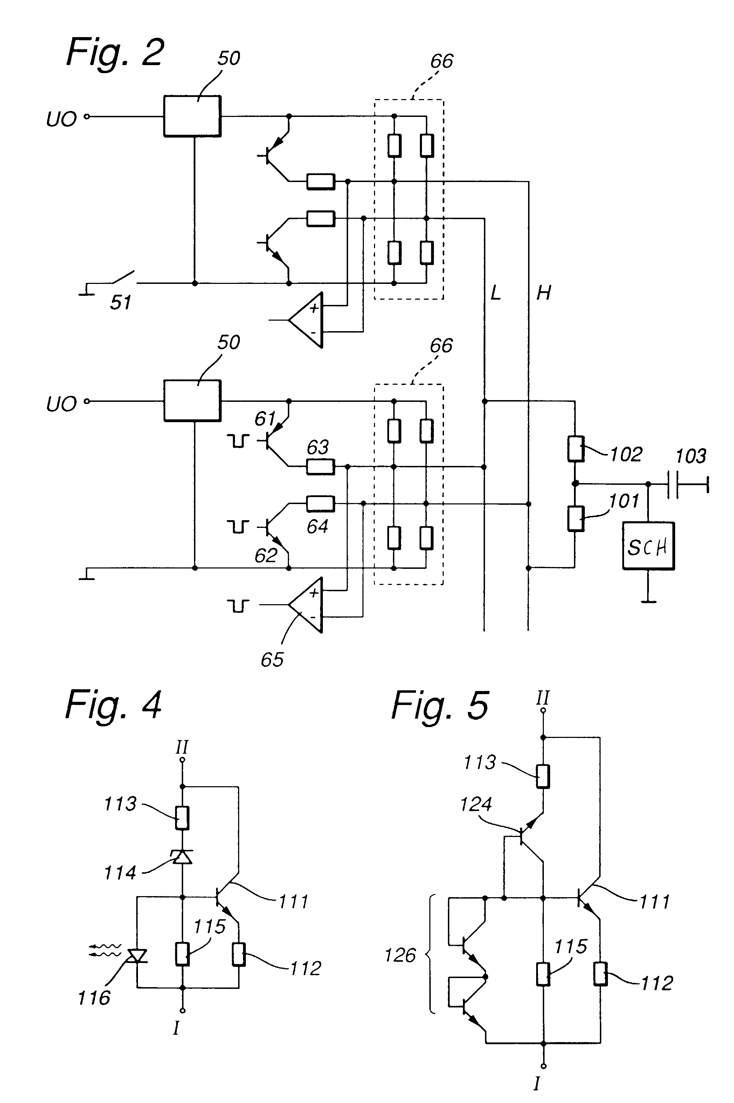

In FIG. 2 sind die Endstellengeräte in einem für ein CAN-BUS-System typischen Aufbau detaillierter dargestellt. Jede Endstelle besitzt eine eigene Einrichtung 50 zur Ableitung einer Betriebsspannung UB, beispielsweise 5V, aus einer Versorgungsspannung UO, insbesondere der Batteriespannung eines KFZ-Bordnetzes. Über Widerstandsnetzwerke 66 wird die Spannung der Datenleitungen H und L im Ruhezustand des BUS-System eingestellt, vorzugsweise auf die halbe Betriebsspannung. Die Transistorenpaare 61, 62 bilden die Sendeendstufen der Endstellengeräte und sind über Vorwiderstände 63, 64 mit den BUS-Leitungen H bzw. L verbunden. Die Endstufen einer sendenden Endstelle sind durch komplementäre Steuersignale so angesteuert, daß beim Senden eines rezessiven Bits die Endstufe stromlos und die BUS-Leitungen im Ruhezustand bleiben, während beim Senden eines dominanten Bits ein Strom durch die Endstufe und die Lastimpedanz fließt und durch den Spannungsabfall an der Lastimpedanz eine BUS-Differenzspannung in den Empfängerstufen 65 der angeschossenen Endstellen detektierbar ist. Die im regulären Betrieb auf den BUS-Leitungen auftretenden Spannungen liegen innerhalb des Bereichs der Betriebsspannung.

Bei Auftrennen der Masseverbindung 51 der Endstelle E1 liegt die gesamte Endstelle im wesentlichen auf den Potential der Versorgungsspannung UO und über das Widerstandsnetzwerk 66 dieser Endstelle wird das Potential der Datenleitungen im Ruhezustand auf einen Wert angehoben, der wesentlich über dem Gleichtaktbereich der als Empfangerstufen 65 beispielsweise vorgesehenen Komparatoren liegen kann, so daß keine Datenkommunikation zwischen den übrigen Endstellen mehr möglich ist.

Gemäß der Erfindung ist nun eine Schutzschaltung S vorgesehen, welche die Datenleitung mit Masse verbindet und im wesentlichen drei deutlich unterscheidbare Bereiche a, b und c der Strom-Spannung-Kennlinie (s. FIG. 3) aufweist.

In einem ersten Bereich a der bis zu einer Schwellspannung US reicht, fließt kein Strom von der Datenleitung durch die Schutzschaltung nach Masse. Die Schwellspannung liegt höher, vorzugsweise nur geringfügig höher, als die im regulären Betrieb auf der Datenleitung maximal auftretende Spannung. Der Datenverkehr im ungestörten Zustand wird somit durch die Schutzschaltung nicht beeinträchtigt.

Im Bereich b oberhalb der Schwellspannung US bis zu einer Eckspannung UE zeigt die Strom-Spannungs-Kennlinie der Schutzschaltung einen steilen Anstieg des Stroms über der Spannung entsprechend einem niedrigen differentiellen Widerstand. Bei der in FIG. 2 beispielhaft skizzierten Auftrennung der Masseverbindung der Endstelle E1 fließt dann ein Strom durch das Widerstandsnetzwerk 66 dieser Endstelle, der im Ruhezustand des BUS-Systems im wesentlichen durch die Schutzschaltung nach Masse abgeleitet wird. Die Schutzschaltung ist unter Berücksichtigung des Aufbaus der Endstellen so zu dimensionieren, daß der Pegel der BUS-Leitungen in diesem Zustand noch im Gleichtaktbereich der Empfängerstufen 65 liegt. Bei Senden eines dominanten Bits durch eine der vollständig angeschlossenen anderen Endstellen wird der Pegel auf den Leitungen L durch den gegenüber den Netzwerken 66 niederohmigen Vorwiderstand 64 weiter deutlich abgesenkt und die daraus resultierende Differenzspannung zwischen den BUS-Leitungen H und L kann in den Empfängerstufen korrekt detektiert werden. Selbstverständlich kann die Dimensionierung der Schutzschaltung in besonderen Fällen durch andere Eckstromwerte IE auch berücksichtigen, den Ausfall mehr als einer Endstelle zu tolerieren.

Im dritten Kennlinienabschnitt c der Schutzschaltung steigt der Strom nur noch gering über der Spannung an entsprechend einem hohen differentiellen Widerstand. Der Ableitstrom durch die Schutzschaltung kann daher auch bei Kurzschluß der Datenleitung gegen die Versorgungsspannung auf Werte begrenzt werden, die eine Zerstörung der Schutzschaltung ausschließen. Die Steuergeräte mit den Endstellen sind so ausgelegt, daß sie einen Kurzschluß gegen die Versorgungsspannung unbeschadet überstehen.

Die Schutzschaltung ist vorzugsweise an den neutralen Punkt P am Mittelabgriff der Lastimpedanz angeschlossen.

In FIG. 4 ist eine erste Ausführungsform einer gemäß der Erfindung vorgesehenen Schutzschaltung skizziert.

Die Basis eines Leistungstransistors ist über die Parallelschaltung eines Widerstands 115 und eines spannungsbegrenzenden Elements, im skizzierten Fall einer Leuchtdiode 116, mit dem ersten Pol I der zweipoligen Schutzschaltung und über die Reihenschaltung einer Zenerdiode 114 und eines Widerstands 113 mit dem Kollektor des Transistors 111 und dem zweiten Pol II der Schutzschaltung verbunden. Der Emitter des Transistors 111 ist über einen weiteren Widerstand 112 an den ersten Pol I angeschlossen. Der erste Pol I der Schutzschaltung ist für die Funktion der Schutzschaltung innerhalb des Kommunikationssystems mit Masse, der zweite Pol mit der Datenleitung, vorzugsweise nach FIG. 2 mit dem neutralen Punkt P des symmetrischen BUS-Systems verbunden.

Solange die Spannung zwischen II und I, d.h. die Spannung der Datenleitung gegen Masse, kleiner als die Summe aus Durchbruchspannung der Zenerdiode und Basis-Emitterspannung von Transistor 111 ist, sperrt der Widerstand 115 den Transistor und es fließt kein Strom von II nach I. Dies entspricht dem Bereich a der Kennlinie nach FIG. 3. Mit zunehmender Spannung zwischen II und I öffnet der Transistor 111 und der Strom steigt über der Spannung schnell an entsprechend dem Kennlinienbereich b. Der differentielle Widerstand der Schutzschaltung wird in diesem Bereich im wesentlichen durch den Widerstand 112 bestimmt. Aufgrund der Begrenzung der Basisspannung durch die Durchlaßspannung der Leuchtdiode 116 bleibt im dritten Bereich der Kennlinie der Ableitstrom durch die Schutzschaltung annähernd konstant. Der differentielle Widerstand in diesem Bereich ist durch den Widerstand 113 geprägt. Der mit zunehmender Spannung noch geringfügig ansteigende zusätzliche Strom durch die Reihenschaltung des Widerstands 113 und der Zenerdiode 114 wird über die Leuchtdiode 116 abgeleitet.

Die in FIG. 5 skizzierte Ausführungsform einer Schutzschaltung ist gegenüber der in FIG. 4 gezeigten Form vorteilhafterweise monolithisch integrierbar. Die Zenerdiode ist durch einen als Diode in Sperrichtung geschalteter Transistor 124 mit definierter Durchbruchspannung, die Leuchtdiode durch die Reihenschaltung 126 mehrerer als Dioden in Durchlaßrichtung geschalteter Transistoren realisierbar. Im übrigen gelten die Ausführungen zur Funktionsweise wie bei FIG. 4.

Die Erfindung ermöglicht mit geringem Aufwand die Weiterführung der Datenkommunikation bei Lösen der Masseverbindung bei einem Steuergerät bei gleichzeitiger Sicherheit gegen Zerstörung für den Fall eines Kurzschlusses gegen die Versorgungsspannung.

## Patentansprüche

1. Datenkomunikationssystem mit einer als Doppelleitung (L, H) eines symmetrischen BUS-Systems ausgeführten Datenleitung und einer zwischen den beiden Leitern der Doppelleitung liegenden Lastimpendanz (101, 102) welche an einem Mittelabgriff einen für Datensignale neutralen Punkt aufweist, dadurch gekennzeichnet, daß zwischen dem Mittelabgriff und Bezugspotential eine Schutzschaltung (SCH) mit drei Strom-Spannungs-Kennlinienbereichen a, b und c gelegt ist, wobei
- im Bereich a unterhalb einer Schwellspannung (US), die über der regulären Spannung der Datenleitung liegt, zwischen Datenleitung und Bezugspotential kein Ableitstrom durch die Schutzschaltung fließt
- im Bereich b oberhalb der Schwellspannung unterhalb einer Eckspannung (UE) ein steiler Anstieg des Ableitstromes (I) über der Spannung erfolgt und
- im Bereich c oberhalb der Eckspannung (UE) der Ableitstrom (I) durch die Schutzschaltung (SCH) begrenzt ist.

2. Datenkommunikaitonssystem nach Anspruch 1, dadurch gekennzeichnet, daß parallel zu der Schutzschaltung (SCH) ein Kondensator (103) angeordnet ist.

3. Datenkommunikationssystem nach einem Anspruch 1 oder 2, dadurch gekennzeichnet, daß es sich um ein CAN-BUS-System in Sternstruktur handelt und die Schutzschaltung im neutralen Punkt (P) des Sternknotens (10) angeschlossen ist.

4. Datenkommunikationssystem nach einem der Ansprüche 1 bis 3, dadurch gekennzeichnet, daß die Schutzschaltung eine Konstantstromquelle mit einem Transistor (111), in dessen Basiskreis eine Reihenschaltung aus einer Zenerdiode (114) und einem Widerstand (113) angeordnet ist enthält, durch die die Schutzschaltung bis zu dem maximalen Fehlstrom im wesentlichen als Konstantspannungsquerregler arbeitet.

## Claims

1. Data-communication system with a data line implemented as a double line (L, H) of a symmetrical bus system, and a load impedance (101, 102), positioned between the two lines of the double line, having a neutral point, for data-signals, at a central tap, characterized in that
A protection circuit (SCH) is placed between the central tap and the reference voltage, whereby,
- no output current flows, through the protection circuit, between the data-line and the reference potential, in a range 'a', below a threshold voltage (th) which is above the normal voltage of the data-line,
- in a range 'b', below a critical voltage value (c), there is a sharp rise in output current (I) with increase in voltage, and
- in a range 'c', above the critical voltage value (c), the output current (I) is limited by the protection circuit (SCH).

2. Data-communication system in accordance with claim 1, characterized in that a capacitor (103) is arranged in parallel with the protection circuit (SCH).

3. Data-communication system in accordance with either claim 1 or 2, characterized in that this is a CAN bus system in a star-configuration, and the protection circuit is connected in at the neutral point (P), at the star-node (10).

4. Data-communications system in accordance with any one of claims 1 to 3, characterized in that the protection circuit contains a constant current source with a transistor (111), in which the basic circuit is that of a zener diode (114) and a resistor (113) connected in series, by means of which the protection circuit functions substantially as a constant-voltage adjuster, up to the maximum current at which the functioning of the diode collapses.

## Revendications

1. Système de communication de données comportant une ligne de transmission de données, agencée sous la forme d'une ligne double (L, H) d'un système BUS symétrique, et une impédance de charge (101, 102) qui est disposée entre les deux conducteurs de la ligne double et comporte, au niveau d'une prise médiane, un point neutre pour des signaux de données, caractérisé en ce qu'un circuit de protection (SCH) comportant une courbe caractéristique courant-tension possédant trois parties a, b, et c est disposé entre la prise médiane et le potentiel de référence, et que
- dans la partie a, au-dessous d'une tension de seuil (US), qui est supérieure à la tension régulière de la ligne de transmission de données, aucun courant de dérivation ne circule dans le circuit de protection entre les lignes de transmission de données et le potentiel de référence,
- dans la partie b, au-dessus de la tension de seuil et au-dessous d'une tension de coude (UE), il se produit un accroissement rapide du courant de dérivation (I) en fonction de la tension, et
- dans la partie c, au-dessus de la tension de coude (UE), le courant de dérivation (C) est limité par le circuit de protection (SCH).

2. Système de communication de données selon la revendication 1, caractérisé en ce qu'un condensateur (103) est monté en parallèle avec le circuit de protection (SCH).

3. Système de communication de données selon la revendication 1 ou 2,caractérisé en ce qu'il s'agit d'un système CAN-BUS à structure en étoile et que le circuit de protection est connecté au niveau du point neutre (P) du centre (10) de l'étoile.

4. Système de communication de données selon les revendications 1 à 3, caractérisé en ce que le circuit de protection contient une source de courant constant possédant un transistor (111), dans le circuit de base duquel est disposé un circuit série formé d'une diode Zener (114) et d'une résistance (113), et au moyen duquel le circuit de protection travaille, jusqu'au courant de défaut maximum, essentiellement en tant que régulateur transversal de tension constante.
